# EUROPEAN PATENT SPECIFICATION

(11) **EP 2 075 966 B1**
(45) Date of publication and mention of the grant of the patent: **19.02.2014**
(21) Application number: 07721232.2
(22) Date of filing: 22.05.2007
(51) Int. Cl.: H04L 12/729, H04L 12/715, H04L 12/913

(54) **METHOD AND APPARATUS FOR COMPUTING A SERVICE PATH**
VERFAHREN UND VORRICHTUNG ZUR BERECHNUNG EINES DIENSTPFADES
PROCÉDÉ ET APPAREIL DE CALCUL D'UN TRAJET DE SERVICE

(30) Priority: 09.10.2006 CN 200610063057
(43) Date of publication of application: 01.07.2009
(73) Proprietor: Huawei Technologies Co., Ltd., Shenzhen, Guangdong Province 518129 (CN)
(72) Inventor: KUANG, Zhendong, Guangdong Province 518129 (CN); XU, Huiying, Guangdong Province 518129 (CN)
(74) Representative: Pfenning, Meinig & Partner GbR
(86) International application number: PCT/CN2007/001659
(87) International publication number: WO 2008/043229

(56) References cited:
- CN-A- 1 494 270
- US-A- 1 529 518
- US-A1- 2003 172 362
- US-A1- 2006 215 660
- EIJI OKI NTT JEAN-LOUIS LE ROUX FRANCE TELECOM ADRIAN FARREL OLD DOG CONSULTING: "Framework for PCE-Based Inter-Layer MPLS and GMPLS Traffic Engineering; draft-ietf-pce-inter-layer-frwk-02.txt" IETF STANDARD-WORKING-DRAFT, INTERNET ENGINEERING TASK FORCE, IETF, CH, vol. pce, no. 2, 1 October 2006 (2006-10-01), XP015048011 ISSN: 0000-0004
- KOHEI SHIOMOTO (NTT) DIMITRI PAPADIMITRIOU (ALCATEL) JEAN-LOUIS LE ROUX (FRANCE TELECOM) MARTIN VIGOUREUX (ALCATEL) DEBORAH BRUNGA: "Requirements for GMPLS-based multi-region and multi-layer networks (MRN/MLN); draft-ietf-ccamp-gmpls-mln-reqs-02.txt" IETF STANDARD-WORKING-DRAFT, INTERNET ENGINEERING TASK FORCE, IETF, CH, vol. ccamp, no. 2, 1 October 2006 (2006-10-01), XP015047746 ISSN: 0000-0004
- LE ROUX (FRANCE TELECOM) D BRUNGARD (AT&T) E OKI (NTT) D PAPADIMITRIOU (ALCATEL) K SHIOMOTO (NTT) M VIGOUREUX (ALCATEL) J L: "Evaluation of existing GMPLS Protocols against Multi Layer and Multi Region Networks (MLN/MRN); draft-ietf-ccamp-gmpls-mln-eval-02.txt" IETF STANDARD-WORKING-DRAFT, INTERNET ENGINEERING TASK FORCE, IETF, CH, vol. ccamp, no. 2, 1 October 2006 (2006-10-01), XP015047745 ISSN: 0000-0004
- KOMPELLA Y REKHTER JUNIPER NETWORKS K: "Label Switched Paths (LSP) Hierarchy with Generalized Multi-Protocol Label Switching (GMPLS) Traffic Engineering (TE); rfc4206.txt" IETF STANDARD, INTERNET ENGINEERING TASK FORCE, IETF, CH, 1 October 2005 (2005-10-01), XP015054887 ISSN: 0000-0003
- KATZ D. ET AL.: 'Traffic Engineering (TE) Extensions to OSPF Version 2 RFC 3630' September 2003, pages 1 - 15, XP015009412

## Description

### Field of the Invention

The present invention relates to the technical field of network communications, in particular, to a method and a device for computing a service path in the technical field of transmission networks.

### Background of the Invention

With the rapid development of data service and the demand on new types of service, works of transforming a transmission network to be IP-based and to support multi-services are on the going. For a transmission network to be capable of supporting multi-services and providing end-to-end OAM (Operation, Administration and Maintenance) and protection/recovery supports, service providers must provide a service network of various switching technologies and various switching granularities. Such a network is referred to as a multilayer network. The ITU-T organization (International Telecommunication Union-Telecommunication Standardization Sector) has given a detailed description of a framework of a multilayer network. The ITU-T deems that the relationship between two adjacent layers of a multilayer network is client/server relationship and a network service layer provides services to a network client layer. The IETF organization (Internet Engineering Task Force) proposes to set up a path in the network service layer according to such a framework, and after being successfully set up, the path is issued to the network client layer as a Traffic Engineering (TE) link and becomes a part of the network topology of the network client layer. The IETF organization further proposes to provide end-to-end services in a multilayer network by a solution with the Virtual Network Topology (VNT) technology as a core technology.

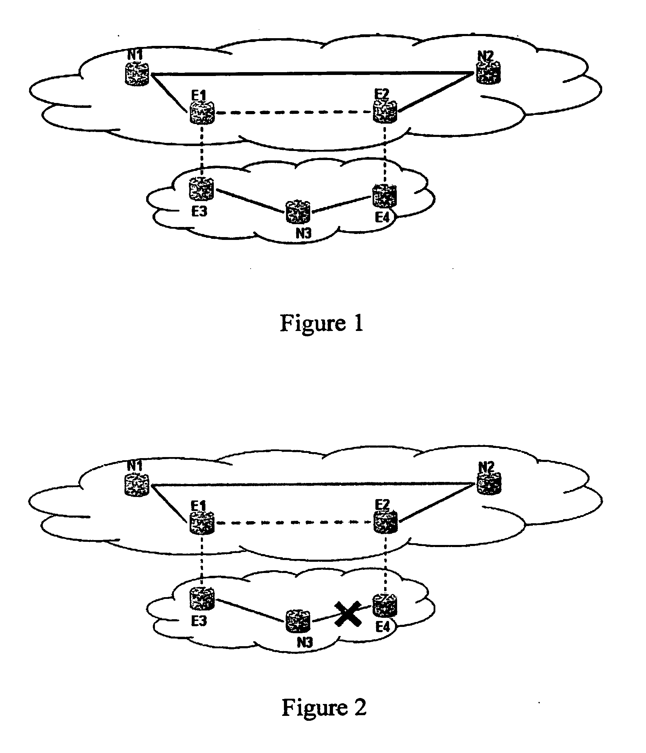

The basic concept of the VNT technology is that: a VNT is formed in the network client layer, and the TE link in the topology can be a path of the network service layer issued as a link of the network client layer, or a virtual link configured in the network client layer. It is considered that the virtual link may set up a corresponding path in the network service layer when required. Figure 1 is a schematic diagram of a network including a virtual link. As shown in Figure 1, the network includes an upper layer and a lower layer. The upper layer is a network client layer including four nodes: N1, N2, E1 and E2, and three TE links: N1-E1, N1-N2 and N2-E2 (as shown by the solid lines in Figure 1). The lower layer is a network service layer including three nodes: N3, E3 and E4, and two TE links: E3-N3 and E4-N3. It should be noted that in a practical network topology, E1 and E3 are a same node, E2 and E4 are also a same node. But for clear description, the two nodes are separated according to the layers and belong to two layers respectively.

As shown in Figure 1, in the network client layer, no direct TE link exists between E1 and E2. According to a VNT technique concept, a TE link from E1 to E2 is configured directly in the network client layer, so that a TE link is added correspondingly on the network topology of the network client layer. But this TE link is virtual, and this virtual link is only used for path computation in the network client layer.

When a border node (E1 or E2) issues TE link information between E1 and E2, it does not consider whether the TE link is an actual link or a virtual link. Therefore, when a service path to be newly built is computed, the computed path may include this TE link (E1-E2). If the link is a virtual link, it triggers setting up of a path (E1-E3-N3-E4-E2) in the network service layer corresponding to the virtual link when a signaling of the network client layer arrives at a border node (E1 or E2) between the network client layer and the network service layer. For the network client layer, whether the path can be set up successfully and how long it takes to set up the path are not predetermined, which may cause problems of low service setting up success ratio or long service recovery time and so on.

For example, Figure 2 is a schematic diagram of a failure in a network including a virtual link. In Figure 2, if a virtual link exists between E1 and E2, the service head node N1 will compute a service path, such as N1-E1-E3-N3-E4-E2-N2, in the network client layer. Before the path is set up, the TE link between N3 and E4 is interrupted, but only when setting up of a corresponding service layer path is triggered, the border node (E1 or E2) of the network client layer gets to know that the service layer path from E1 to E2 does not exist, which may cause unsuccessful setting up of the service path (N1-E1-E3-N3-E4-E2-N2).

According to another VNT technique concept, as shown in Figure 1, a path (E3-N3-E4) is set up in the network service layer, so that E1 and E2 are linked via a path E1-E3-N3-E4-E2. Then, a TE link (E1-E2), as shown by the dashed line between E1 and E2 in Figure 1, is generated according to the path (E3-N3-E4) that has been set up. The TE link information is issued in the network client layer, so that an actual link from E1 to E2 is added on the network topology of the network client layer. This method does not have problems of low service setting up success ratio or long service recovery time caused by the existence of a virtual link, but if the path set up in advance in the network service layer does not carry services of the network client layer for a long time, the path resources of the network service layer are wasted. Further, the method cannot flexibly select a TE link as the path computation resource according to service requirement in the network client layer.

EIJI OKI JEAN-LOUIS LE ROUX FRANCE TELECOM ADRIAN FARREL OLD DOG CONSULTING: "Framework for PCE-Based Inter-Layer MPLS and GMPLS Traffic Engineering; draft-ietf-pce-inter-layer-frwk-02.txt" IETF STANDARD-WORKING-DRAFT, INTERNET ENGINEERING TASK FORCE, IETF, CH, vol. pce, no. 2, 1 October 2006(2006-10-01), XP015048011 ISSN: 0000-0004 discloses a framework for applying the PCE-based path computation architecture to inter-layer traffic engineering. It provides suggestion for the deployment of PCE in support of multilayer networks. This document also describes network models where PCE performs inter-layer traffic engineering, and the relationship between PCE and a functional component in charge of the control ad management of the VNT, and called the Virtual Network Topology Manager (VNTM).

US 2003/172362 discloses method and system for multi-layer network routing. Each node of a telecommunications network determines a connection type attributes available for each signal type supported by the node. Each signal type represents a different connection routing layer within the telecommunications network. Adaptation costs involved in traversing from one connection routing layer to another connection routing layer in the node are calculated, The connection type attributes and adaption costs are included in a link state advertisement broadcasted by each node in the telecommunications network. A route calculation is performed for a desired signal to determine a route through the telecommunications network for the signal. The route calculation takes into account the various connection type attributes, availability, and adaption costs in determining the shortest route for the signal through the telecommunications network.

KOHEI SHIOMOTO (NTT) DIMITRI PADADIMITIOU (ALCATEL) JEAN-LOUIS LE ROUX (FRANCE TELECOM) MARTIN VIGOUREX (ALCATEL) DEBORAH BRUNGA: "Requirements for GMPLS-based multi-region and multi-layer networks (MRN/MLN); draft-ietf-ccamp.gmpls.mln-reqs-02.txt" IETF STANDARD-WORKING-DRAFT, INTERNET ENGINEERING TASK FORCE, IETF, CH, vol. ccamp, no. 2, 1 October 2006 (2006-10-01), XP015047746 ISSN: 0000-0004 discloses the requirements to support multi-region/multi-layer networks. There is no intention to specify solution-specific elements in this document. The applicability of existing GMPLS protocols and any protocol extensions to the MRN/MLN will be addressed in separate documents [MRN-EVAL].

### Summary of the Invention

Embodiments of the present invention provide a method and a device for computing a service path to achieve rational usage of resources.

The technical solution according to an embodiment of the present invention is implemented as follows:

A method for computing a service path, including:
obtaining TE link information carrying a link attribute ID and issued in a network client layer;
selecting a TE link corresponding to a link attribute ID that satisfies a service requirement as a path computation resource in the network client layer according to the service requirement and the TE link information; and
computing a service path according to the selected path resource,
wherein the link attribute ID is an actual link attribute ID or a virtual link attribute ID, and the actual link attribute ID identifies a Traffic Engineering Link as an actual link and the virtual link attribute ID identifies a Traffic Engineering Link as a virtual link;
wherein, before obtaining the Traffic Engineering Link information, the method further comprises at least one step of the following three steps:
   determining a Traffic Engineering Link in the network client layer according to a link discovery mechanism, identifying the Traffic Engineering Link as an actual link, and issuing Traffic Engineering Link information carrying the actual link attribute ID in the network client layer;
   configuring a Traffic Engineering Link in the network client layer, identifying the Traffic Engineering Link as a virtual link, and issuing Traffic Engineering Link information carrying the virtual link attribute ID in the network client layer;
   setting up a service layer path in the network service layer in advance, generating a Traffic Engineering Link according to the service layer path, identifying the Traffic Engineering Link as an actual link, and issuing Traffic Engineering Link information carrying the actual link attribute ID in the network client layer.

A device for computing a service path comprising:
an information receiving unit, adapted to obtain TE link information carrying a link attribute ID and issued in a network client layer;
a resource selecting unit, adapted to select a TE link corresponding to a link attribute ID that satisfies a service requirement as a path computation resource in the network client layer according to the service requirement and the TE link information; and
a path computing unit, adapted to compute a service path according to the selected path resource,
wherein the link attribute ID is an actual link attribute ID or a virtual link attribute ID, and the actual link attribute ID identifies a Traffic Engineering Link as an actual link and the virtual link attribute ID identifies a Traffic Engineering Link as a virtual link;
wherein, further comprising:
   an identifying unit, adapted to identify a Traffic Engineering Link as an actual link and/or a virtual link; and
   an issuing unit, adapted to issue Traffic Engineering Link information carrying the actual link attribute ID and/or the virtual link attribute ID;
wherein, further comprising:
   an ID modifying unit, adapted to set up a corresponding service layer path in the network service layer according to a Traffic Engineering Link carrying the virtual link attribute ID, modify the attribute ID of the Traffic Engineering Link as an actual link, and notify the issuing unit;
   the issuing unit, adapted to reissue new Traffic Engineering Link information carrying the actual link attribute ID in the network client layer according to the received notification; and
   the information receiving unit, adapted to obtain new Traffic Engineering Link information carrying the actual link attribute ID and reissued in the network client layer;
   wherein the resource selecting unit comprises:
   a request distinguishing unit, adapted to send a first path resource selection notification when it is determined that a received request is a request for rapidly setting up a service path; and
   a resource selection operating unit, adapted to select a Traffic Engineering Link carrying the actual link attribute ID as path computation resource in the network client layer according to the received first path resource selection notification.

Thus, by additionally setting a TE link attribute ID, an actual link and a virtual link in the network client layer may be distinguished, so that it is convenient to flexibly select a suitable actual link and/or virtual link as the path computation resource according to different service requirements when computing a route, thereby using path resources of a network client layer and a network service layer reasonably. Especially when recovering a service, it is usually required that the service be recovered shortly. Through the technical solution according to embodiments of the present invention, problems of low successful service setting up ratio due to existence of a virtual link, or long service recovery time and so on may be solved.

### Brief Description of the Drawings

Figure 1 is a schematic diagram of a network including a virtual link;
Figure 2 is a schematic diagram of a failure in a network including a virtual link;
Figure 3 is a flow chart of a method for computing a service path according to an embodiment of the present invention;
Figure 4 is a schematic diagram of a link attribute value according to an embodiment of the present invention; and
Figure 5 is a schematic diagram of recovering a service including a virtual link according to an embodiment of the present invention.

### Detailed Description of the Embodiments

To make the objects, technical solutions and advantages of the invention more apparent, the invention will now be further illustrated in detail in conjunction with the drawings and specific embodiments.

The technical solution according to embodiments of the invention is: when a network topology is constructed for a network client layer, an attribute ID is additionally set for a TE link on the network topology, so that an actual link and/or a virtual link may be distinguished; an actual link and/or a virtual link is flexibly selected as resource for route computation in the network client layer according to different service requirements; and a service head node computes a service path according to the selected path resource. Therefore, with the technical solution of embodiments of the present invention, problems of low successful service setting up ratio caused by existence of a virtual link or long service recovery time, etc., may be solved, and path resources may be used reasonably.

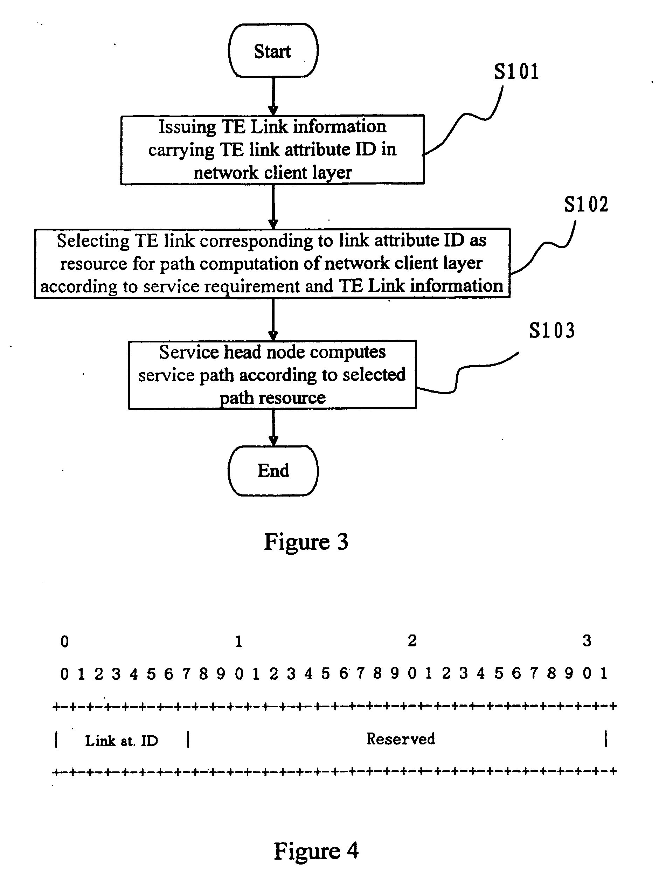

Figure 3 shows a flow chart of a method for computing a service path according to an embodiment of the present invention. The method includes the following steps:

S101: obtaining TE link information carrying a TE link attribute ID and issued in a network client layer;

In the network client layer, a plurality of TE links form a network topology includes:
a. an actual link of the network client layer: a TE link obtained according to a link discovery mechanism of a node;
b. a Virtual link configured in the network client layer: a TE link configured directly in the network client layer; and
c. an actual link issued by the network service layer: a TE link generated according to a service layer path set up in advance in the network service layer.

Different attribute IDs including actual link attribute IDs and virtual link attribute IDs are additionally set for a plurality of TE links, so that actual links and virtual links in the network client layer are distinguished while the network topology is constructed. Specifically, a TE link obtained via the link discovery mechanism of the node is identified as an actual link, and TE link information carrying the actual link attribute ID is issued in the network client layer; a TE link configured in the network client layer is identified as a virtual link, and TE link information carrying the virtual link attribute ID is issued in the network client layer; a TE link generated by a service layer path is identified as an actual link, and TE link information carrying the actual link attribute ID is issued in the network client layer.

The issue of TE link information is implemented via Open Shortest Path First (OSPF) flooding mechanism. It should be noted that detailed description on the issue of TE link information is given in file RFC4206 of IETF. The description includes information on link type, local and remote link ID, maximum bandwidth, available bandwidth etc. In embodiments of the present invention, a link attribute ID is additionally set to describe virtual and actual links existing on the network. Usually, TE link information is issued in the path by being assembled into Opaque Link State Advertisement (Opaque LSA) in Type Length Value (TLV) format, and then issued in the entire network. Therefore, embodiments of the invention extend a sub-TLV to Opaque LSA, and an attribute value is set for determining whether the TE link is a virtual link or an actual link. For example, as shown in the following Table 1, the type of the sub-TLV is 11, the length is 1 byte, and the name is link attribute ID.

**Table 1: Format Table of Link Attribute ID TLV**

| Sub-TLV Type | Length | Name |
|---|---|---|
| 11 | 1 | link attribute ID |

Figure 4 is a schematic diagram of a link attribute value according to an embodiment of the present invention. In Figure 4, Link at. ID occupies bits 0 to 7. It is supposed that setting Link at. ID as 1 means that the TE link is a virtual link, while setting Link at. ID as 0 means that the TE link is an actual link, other values means that it is extended for other use.

Additionally, a TE link attribute ID may be modified. A border node of a TE link directly configured in the network client layer triggers setting up of a corresponding service layer path in the network service layer. The attribute ID of the TE link is modified from a virtual link attribute ID to an actual link attribute ID, and then new TE link information carrying the actual link attribute ID is reissued in the network client layer.

That is, before being issued in the network client layer, the attribute of the TE link information needs to be identified, and then issued after identified; if the attribute ID of the TE link is modified, the modified ID shall be reissued.

S102: selecting a TE link corresponding to the link attribute ID that satisfies a service requirement as path computation resource in the network client layer according to the service requirement and the TE link information;

There are various service requirements, including: rapidly setting up a service path, recovering a service, newly building an additional service, and occupying actual links in the service layer as little as possible, etc. In some cases, recovering a service and newly building an additional service both have higher requirement for service recovery time, and such requirements are similar to the requirement for rapidly setting up a service path. Therefore, a service head node can select suitable path resources for computation by distinguishing between an actual link and a virtual link and in conjunction with the service requirement before computing a service path.

Upon receiving a request for rapidly setting up a service path, a service node of the network client layer preferably selects a TE link carrying an actual link attribute ID as path computation resource in the network client layer. If actual link resources on the network are insufficient, a TE link carrying a virtual link attribute ID is additionally selected as path computation resource in the network client layer.

If a received request has no strict requirement on service setting up time, the service node flexibly selects a TE link carrying an actual link attribute ID and/or a virtual link attribute ID as path computation resource in the network client layer. For example, upon receiving a request for occupying actual links of the service layer as little as possible, the service head node selects a virtual link of the network client layer and an actual link of the network client layer as path computation resource.

S 103: computing a service path according to the selected path resources.

For example, the service head node computes a path by means of a Shortest Path First algorithm based on the selected resources for path computation. Specifically, the algorithm includes: OSPF and Constraint Shortest Path First (CSPF). It should be appreciated that in addition to the service head nodes, other node equipment on the network, such as a node or its proxy node on the network, may also compute a path.

To further understand embodiments of the invention, a method for computing a service path is described in detail in conjunction with Figure 4.

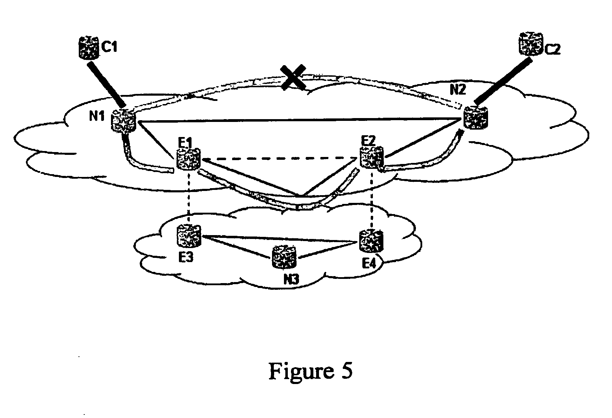

Figure 5 is a schematic diagram of recovering a service that includes a virtual link according to an embodiment of the invention. Similar to Figure 1, the network in Figure 5 comprises an upper layer and a lower layer. The upper layer is a network client layer including four nodes: N1, N2, E1 and E2, the lower layer is a network service layer including three nodes: E3, E4 and N3. Two clients C1 and C2 are connected to nodes N1 and N2 respectively (as shown by the heavy solid lines between C1, N1 and C2, N2 respectively in Figure 5).

Firstly, while constructing a network topology, the network client layer additionally sets different attribute IDs for TE links on the network.

A node of the network client layer determines three TE links: N1-E1, N1-N2 and N2-E2 (as shown by the thin solid lines among N1, N2, E1 and E2 in Figure 5) by means of a link discovery mechanism. These three TE links are identified as actual links, and the actual link information of N1-E1, N1-N2 and N2-E2 is issued in the network client layer.

In the network service layer, E3-N3-E4 is selected according to Shortest Path First algorithm to set up a path, and a TE link (E1-E2, as shown by the thin solid line between E1 and E2 in Figure 5) is generated according to the path in the service layer. The TE link is identified as an actual link, and the actual link information of E1-E2 is issued in the network client layer.

A TE link (E1-E2, as shown by the thin dashed line between E1 and E2 in Figure 5) is configured directly in the network client layer. The TE link is identified as a virtual link, and virtual link information of E1-E2 is issued in the network client layer. A path in the network service layer corresponding to the virtual link may be E1-E3-N3-E4-E2 or E1-E3 -E4-E2.

Next, a suitable TE link is selected as resource for the path computation in the network client layer according to a request for rapidly recovering a path.

Supposing that there exists an end-to-end service connection C1-N1-N2-C2, when the operating path between N1 and N2 is interrupted due to failure (as shown by the cross marked heavy solid line between N1 and N2 in Figure 5), head node N1 is triggered to initiate rapid recovery of a path. Because of the issue of the TE link information, N1 obtains the topology information of the whole client layer network; and via the link attribute ID in the TE link information, N1 knows which TE link is an actual link and which link is a virtual link. Therefore, according to the received request for rapidly recovering a path, N1 preferably selects an actual link in the network client layer and an actual link in the network service layer, i.e., N1-E1, E1-E2 and E2-N2, as path computation resource.

If the actual link E1-E2 is occupied, the virtual link E1-E2 is additionally selected as path computation resource. Thus, when a routing signaling reaches E1, it will trigger to set up a path corresponding to the virtual link, E1-E3-N3-E4-E2, in the network service layer according to a Shortest Path First algorithm.

Finally, the head node N1 sets up a recovery path including N1, E1, E2 and N2 (as shown by the heavy solid line among N1, E1, E2 and N2 in Figure 5) according to the selected TE link.

It should be noted that those skilled in the art may understand that part or all of the steps for implementing the method according to the above embodiments may be implemented by instructing relevant hardware by a program. The program may be stored in a computer-readable storage medium such as a ROM/RAM, a Magnetic Disc or a Compact Disc. When executed, the program implements the steps of the above method.

It should be appreciated that an embodiment of the invention further provides a device for computing a service path including:
an information receiving unit, adapted to obtain TE link information carrying a link attribute ID that is issued in a network client layer;
a resource selecting unit, adapted to select a TE link corresponding to a link attribute ID that satisfies a service requirement as path computation resource in the network client layer according to the service requirement and the TE link information; and
a path computing unit, adapted to compute a service path according to the selected path resource. The above link attribute ID is an actual link attribute ID or a virtual link attribute ID.

The processes for issuing the TE link information and selecting the path computation resource are the same as described above, so they will not be described again here.

In addition, the device may also include an identifying unit adapted to identify a TE link as an actual link and/or a virtual link, and an issuing unit adapted to issue TE link information carrying the actual link and/or virtual link attribute ID.

The device may also include an ID modifying unit adapted to set up a corresponding service layer path in the network service layer according to TE link carrying a virtual link attribute ID, modify the attribute ID of the TE link as an actual link, and notify the issuing unit. The issuing unit is adapted to reissue new TE link information carrying the actual link attribute ID in the network client layer according to the received notification. In this case, the information receiving unit is further adapted to obtain the new TE link information carrying the actual link attribute ID that is reissued in the network client layer.

Moreover, the resource selecting unit may specifically include:
a request distinguishing unit, adapted to send a first path resource selection notification when it is determined that a received service request is a request for rapidly setting up a service path; and
a resource selection operating unit, adapted to select a TE link carrying the actual link attribute ID as path computation resource in the network client layer according to the received first path resource selection notification; In this case, the resource selection operating unit is further adapted to additionally select a TE link carrying a virtual link attribute ID as path computation resource in the network client layer when it is determined that the TE link resource carrying the actual link attribute ID is insufficient.

The request distinguishing unit is further adapted to send a second path resource selection notification when it is determined that a received request is not a request for rapidly setting up a service path. In this case, the resource selection operating unit is adapted to select a TE link carrying an actual link and/or a virtual link attribute ID as path computation resource in the network client layer correspondingly according to the received second path resource selection notification and the network topology resource.

Above is only preferred embodiments of the present invention, and the scope of the invention is not limited thereto. Additional modifications easily occur to those skilled in the art will be covered by the present invention. Therefore, the scope of the present invention will be defined by the appended claims.

## Claims

1. A method for computing a service path, comprising:
obtaining Traffic Engineering Link information carrying a link attribute ID and issued in a network client layer (S101);
selecting a Traffic Engineering Link corresponding to the link attribute ID that satisfies a service requirement as path computation resource in the network client layer according to the service requirement and the Traffic Engineering Link information(S102); and
computing a service path according to the selected path computation resource (S103),
wherein the link attribute ID is an actual link attribute ID or a virtual link attribute ID, and the actual link attribute ID identifies a Traffic Engineering Link as an actual link and the virtual link attribute ID identifies a Traffic Engineering Link as a virtual link;
wherein, before obtaining the Traffic Engineering Link information, the method further comprises at least one step of the following three steps 1), 2) or 3):
1) determining a Traffic Engineering Link in the network client layer according to a link discovery mechanism, identifying the Traffic Engineering Link as an actual link, and issuing Traffic Engineering Link information carrying the actual link attribute ID in the network client layer;
2) configuring a Traffic Engineering Link in the network client layer, identifying the Traffic Engineering Link as a virtual link, and issuing Traffic Engineering Link information carrying the virtual link attribute ID in the network client layer;
3) setting up a service layer path in the network service layer in advance, generating a Traffic Engineering Link according to the service layer path, identifying the Traffic Engineering Link as an actual link, and issuing Traffic Engineering Link information carrying the actual link attribute ID in the network client layer.

2. The method for computing a service path according to claim 1 further comprising:
modifying the link attribute ID of the Traffic Engineering Link as an actual link in the case that a corresponding service layer path is set up in the network service layer according to the Traffic Engineering Link carrying the virtual link attribute ID, and reissuing new Traffic Engineering Link information carrying the actual link attribute ID in the network client layer.

3. The method for computing a service path according to claim 1 or 2, wherein the identifying the Traffic Engineering Link comprises: extending a sub-Type Length Value in Opaque Link State Advertisement of the Traffic Engineering Link information.

4. The method for computing a service path according to claim 1, wherein the selecting path computation resource comprises:
selecting a Traffic Engineering Link carrying the actual link attribute ID as path computation resource in the network client layer, if a received request is a request for rapidly setting up a service path;
if Traffic Engineering Link resource carrying the actual link attribute ID is insufficient, a Traffic Engineering Link carrying the virtual link attribute ID is additionally selected as path computation resource in the network client layer.

5. A device for computing a service path comprising:
an information receiving unit, adapted to obtain Traffic Engineering Link information carrying a link attribute ID that is issued in a network client layer;
a resource selecting unit, adapted to select a Traffic Engineering Link corresponding to the link attribute ID that satisfies a service requirement as path computation resource in the network client layer according to the service requirement and the Traffic Engineering Link information; and
a path computing unit, adapted to compute a service path according to the selected path computation resource,
wherein the link attribute ID is an actual link attribute ID or a virtual link attribute ID and the actual link attribute ID identifies a Traffic Engineering Link as an actual link and the virtual link attribute ID identifies a Traffic Engineering Link as a virtual link,
further comprising:
an identifying unit, adapted to identify a Traffic Engineering Link as an actual link and/or a virtual link; and
an issuing unit, adapted to issue Traffic Engineering Link information carrying the actual link attribute ID and/or the virtual link attribute ID;
further comprising:
an ID modifying unit, adapted to set up a corresponding service layer path in the network service layer according to a Traffic Engineering Link carrying the virtual link attribute ID, modify the attribute ID of the Traffic Engineering Link as an actual link, and notify the issuing unit;
the issuing unit, adapted to reissue new Traffic Engineering Link information carrying the actual link attribute ID in the network client layer according to the received notification; and
the information receiving unit, adapted to obtain new Traffic Engineering Link information carrying the actual link attribute ID and reissued in the network client layer; wherein the resource selecting unit comprises:
a request distinguishing unit, adapted to send a first path resource selection notification when it is determined that a received request is a request for rapidly setting up a service path; and
a resource selection operating unit, adapted to select a Traffic Engineering Link carrying the actual link attribute ID as path computation resource in the network client layer according to the received first path resource selection notification.

6. The device for computing a service path according to claim 5, wherein:
the resource selection operating unit is further adapted to additionally select a Traffic Engineering Link carrying the virtual link attribute ID as path computation resource in the network client layer when it is determined that Traffic Engineering Link resource carrying the actual link attribute ID is insufficient.

7. The device for computing a service path according to claim 5, wherein:
the request distinguishing unit is further adapted to send a second path resource selection notification when it is determined that a received request is not a request for rapidly setting up a service path; and
the resource selection operating unit is further adapted to select a Traffic Engineering Link carrying the actual link attribute ID and/or the virtual link attribute ID as path computation resource in the network client layer according to the received second path resource selection notification and network topology resource.

## Patentansprüche

1. Verfahren zum Berechnen eines Dienstpfads, umfassend:
Erhalten von "Traffic Engineering Link"-Informationen, die eine Streckenattribut-ID führen und in einer Netz-Client-Schicht ausgegeben werden (S101);
Auswählen einer "Traffic Engineering Link", die der Streckenattribut-ID entspricht, die eine Dienstanforderung erfüllt, als Pfadberechnungsbetriebsmittel in der Netz-Client-Schicht gemäß der Dienstanforderung und den "Traffic Engineering Link"-Informationen (S 102); und
Berechnen eines Dienstpfads gemäß dem ausgewählten Pfadberechnungsbetriebsmittel (S103),
wobei die Streckenattribut-ID eine tatsächliche Streckenattribut-ID oder eine virtuelle Streckenattribut-ID ist und die tatsächliche Streckenattribut-ID eine "Traffic Engineering Link" als tatsächliche Strecke identifiziert, und die virtuelle Streckenattribut-ID eine "Traffic Engineering Link" als virtuelle Strecke identifiziert;
wobei das Verfahren vor dem Erhalten der "Traffic Engineering Link"-Informationen ferner mindestens einen Schritt der folgenden drei Schritte 1), 2) oder 3) umfasst:
1) Bestimmen einer "Traffic Engineering Link" in der Netz-Client-Schicht gemäß einem Streckenentdeckungsmechanismus, Identifizieren der "Traffic Engineering Link" als tatsächliche Strecke und Ausgeben von "Traffic Engineering Link"-Informationen, die die tatsächliche Streckenattribut-ID führen, in der Netz-Client-Schicht;
2) Konfigurieren einer "Traffic Engineering Link" in der Netz-Client-Schicht, Identifizieren der "Traffic Engineering Link" als virtuelle Strecke und Ausgeben von "Traffic Engineering Link"-Informationen, die die virtuelle Streckenattribut-ID führen, in der Netz-Client-Schicht;
3) Aufbauen eines Dienstschichtpfads in der Netz-Dienstschicht im Voraus, Erzeugen einer "Traffic Engineering Link" gemäß dem Dienstschichtpfad, Identifizieren der "Traffic Engineering Link" als tatsächliche Strecke und Ausgeben von "Traffic Engineering Link"-Informationen, die die tatsächliche Streckenattribut-ID führen, in der Netz-Client-Schicht.

2. Verfahren zum Berechnen eines Dienstpfads nach Anspruch 1, ferner umfassend:
Modifizieren der Streckenattribut-ID der "Traffic Engineering Link" als tatsächliche Strecke, falls ein entsprechender Dienstschichtpfad in der Netz-Dienstschicht aufgebaut ist, gemäß der "Traffic Engineering Link", die die virtuelle Streckenattribut-ID führt, und Neuausgeben von neuen "Traffic Engineering Link"-Informationen, die die tatsächliche Streckenattribut-ID führen, in der Netz-Client-Schicht.

3. Verfahren zum Berechnen eines Dienstpfads nach Anspruch 1 oder 2, wobei das Identifizieren der "Traffic Engineering Link" Folgendes umfasst: Erweitern eines Sub-"Type Length Value" im "Opaque Link State Advertisement" der "Traffic Engineering Link"-Informationen.

4. Verfahren zum Berechnen eines Dienstpfads nach Anspruch 1, wobei das Pfadberechnungsbetriebsmittel-Auswählen Folgendes umfasst:
Auswählen einer "Traffic Engineering Link", die die tatsächliche Streckenattribut-ID führt, als Pfadberechnungsbetriebsmittel in der Netz-Client-Schicht, wenn eine empfangene Anforderung eine Anforderung zum schnellen Aufbauen eines Dienstpfads ist;
wenn das "Traffic Engineering Link"-Betriebsmittel, das die tatsächliche Streckenattribut-ID führt, unzureichend ist, wird zusätzlich eine "Traffic Engineering Link", die die virtuelle Streckenattribut-ID führt, als Pfadberechnungsbetriebsmittel in der Netz-Client-Schicht ausgewählt.

5. Einrichtung zum Berechnen eines Dienstpfads, umfassend:
eine Informationsempfangseinheit, ausgelegt zum Erhalten von "Traffic Engineering Link"-Informationen, die eine Streckenattribut-ID führen und in einer Netz-Client-Schicht ausgegeben werden;
eine Betriebsmittelauswahleinheit, ausgelegt zum Auswählen einer "Traffic Engineering Link", die der Streckenattribut-ID entspricht, die eine Dienstanforderung erfüllt, als Pfadberechnungsbetriebsmittel in der Netz-Client-Schicht gemäß der Dienstanforderung und den "Traffic Engineering Link"-Informationen; und
eine Pfadberechnungseinheit, ausgelegt zum Berechnen eines Dienstpfads gemäß dem ausgewählten Pfadberechnungsbetriebsmittel,
wobei die Streckenattribut-ID eine tatsächliche Streckenattribut-ID oder eine virtuelle Streckenattribut-ID ist und die tatsächliche Streckenattribut-ID eine "Traffic Engineering Link" als tatsächliche Strecke identifiziert, und die virtuelle Streckenattribut-ID eine "Traffic Engineering Link" als virtuelle Strecke identifiziert;
ferner umfassend:
eine Identifizierungseinheit, ausgelegt zum Identifizieren einer "Traffic Engineering Link" als tatsächliche Strecke und/oder virtuelle Strecke; und
eine Ausgabeeinheit, ausgelegt zum Ausgeben von "Traffic Engineering Link"-Informationen, die die tatsächliche Streckenattribut-ID und/oder die virtuelle Streckenattribut-ID führen;
ferner umfassend:
eine ID-Modifizierungseinheit, ausgelegt zum Aufbauen eines entsprechenden Dienstschichtpfads in der Netz-Dienst-Schicht gemäß einer "Traffic Engineering Link", die die virtuelle Streckenattribut-ID führt, Modifizieren der Attribut-ID der "Traffic Engineering Link" als tatsächliche Strecke und Melden des Ausgabeergebnisses;
die Ausgabeeinheit, ausgelegt zum Neuausgeben von neuen "Traffic Engineering Link"-Informationen, die die tatsächliche Streckenattribut-ID führen, in der Netz-Client-Schicht gemäß der empfangenen Meldung; und
die Informationsempfangseinheit, ausgelegt zum Erhalten von neuen "Traffic Engineering Link"-Informationen, die die tatsächliche Streckenattribut-ID führen und in der Netz-Client-Schicht neu ausgegeben werden;
wobei die Betriebsmittelauswahleinheit Folgendes umfasst:
eine Anforderungsunterscheidungseinheit, ausgelegt zum Senden einer ersten Pfadbetriebsmittelauswahlmeldung, wenn bestimmt wird, dass eine empfangene Anforderung eine Anforderung des schnellen Aufbaus eines Dienstpfads ist; und eine Betriebsmittelauswahl-Betätigungseinheit, ausgelegt zum Auswählen einer "Traffic Engineering Link", die die tatsächliche Streckenattribut-ID führt, als Pfadberechnungsbetriebsmittel in der Netz-Client-Schicht gemäß der empfangenen ersten Pfadbetriebsmittelauswahlmeldung.

6. Einrichtung zum Berechnen eines Dienstpfads nach Anspruch 5, wobei die Betriebsmittelauswahl-Betätigungseinheit ferner ausgelegt ist zum zusätzlichen Auswählen einer "Traffic Engineering Link", die die virtuelle Streckenattribut-ID führt, als Pfadberechnungsbetriebsmittel in der Netz-Client-Schicht, wenn bestimmt wird, dass das "Traffic Engineering Link"-Betriebsmittel, das die tatsächliche Streckenattribut-ID führt, unzureichend ist.

7. Einrichtung zum Berechnen eines Dienstpfads nach Anspruch 5, wobei die Anforderungsunterscheidungseinheit ferner ausgelegt ist zum Senden einer zweiten Pfadbetriebsmittelauswahlmeldung, wenn bestimmt wird, dass eine empfangene Anforderung nicht eine Anforderung des schnellen Aufbauens eines Dienstpfads ist; und
die Betriebsmittelauswahl-Betätigungseinheit ferner ausgelegt ist zum Auswählen einer "Traffic Engineering Link", die die tatsächliche Streckenattribut-ID und/oder die virtuelle Streckenattribut-ID führt, als Pfadberechnungsbetriebsmittel in der Netz-Client-Schicht gemäß der empfangenen zweiten Pfadbetriebsmittelauswahlmeldung und Netztopologiebetriebsmitteln.

## Revendications

1. Procédé de calcul d'un trajet de service, comprenant :
l'obtention d'informations de Liaison d'Ingénierie de Trafic acheminant un ID d'attribut de liaison et émises dans une couche de client de réseau (S101) ;
la sélection d'une Liaison d'Ingénierie de Trafic correspondant à l'ID d'attribut de liaison qui satisfait à une exigence de service en tant que ressource de calcul de trajet dans la couche de client de réseau conformément à l'exigence de service et aux informations de Liaison d'Ingénierie de Trafic (S 102) ; et
le calcul d'un trajet de service conformément à la ressource de calcul de trajet sélectionnée (S103),
dans lequel l'ID d'attribut de liaison est un ID d'attribut de liaison réelle ou un ID d'attribut de liaison virtuelle, et l'ID d'attribut de liaison réelle identifie une Liaison d'Ingénierie de Trafic en tant que liaison réelle et l'ID d'attribut de liaison virtuelle identifie une Liaison d'Ingénierie de Trafic en tant que liaison virtuelle ;
dans lequel, avant d'obtenir les informations de Liaison d'Ingénierie de Trafic, le procédé comprend en outre au moins une étape parmi les trois étapes 1), 2) ou 3) suivantes :
1) la détermination d'une Liaison d'Ingénierie de Trafic dans la couche de client de réseau conformément à un mécanisme de découverte de liaison, l'identification de la Liaison d'Ingénierie de Trafic en tant que liaison réelle et l'émission d'informations de Liaison d'Ingénierie de Trafic acheminant l'ID d'attribut de liaison réelle dans la couche de client de réseau ;
2) la configuration d'une Liaison d'Ingénierie de Trafic dans la couche de client de réseau, l'identification de la Liaison d'Ingénierie de Trafic en tant que liaison virtuelle et l'émission d'informations de Liaison d'Ingénierie de Trafic acheminant l'ID d'attribut de liaison virtuelle dans la couche de client de réseau ;
3) l'établissement à l'avance d'un trajet de couche de service dans la couche de service de réseau, la génération d'une Liaison d'Ingénierie de Trafic conformément au trajet de couche de service, l'identification de la Liaison d'Ingénierie de Trafic en tant que liaison réelle, et l'émission d'informations de Liaison d'Ingénierie de Trafic acheminant l'ID d'attribut de liaison réelle dans la couche de client de réseau.

2. Procédé de calcul d'un trajet de service selon la revendication 1, comprenant en outre :
la modification de l'ID d'attribut de liaison de la Liaison d'Ingénierie de Trafic en tant que liaison réelle dans le cas où un trajet de couche de service correspondant est établi dans la couche de service de réseau conformément à la Liaison d'Ingénierie de Trafic acheminant l'ID d'attribut de liaison virtuelle, et la réémission de nouvelles informations de Liaison d'Ingénierie de Trafic acheminant l'ID d'attribut de liaison réelle dans la couche de client de réseau.

3. Procédé de calcul d'un trajet de service selon la revendication 1 ou 2, dans lequel l'identification de la Liaison d'Ingénierie de Trafic comprend : l'extension d'une Valeur de Longueur de sous-Type dans une Annonce d'Etat de Liaison Opaque des informations de Liaison d'Ingénierie de Trafic.

4. Procédé de calcul d'un trajet de service selon la revendication 1, dans lequel la sélection de la ressource de calcul de trajet comprend :
la sélection d'une Liaison d'Ingénierie de Trafic acheminant l'ID d'attribut de liaison réelle en tant que ressource de calcul de trajet dans la couche de client de réseau, si une demande reçue est une demande d'établissement rapide d'un trajet de service ;
si la ressource de Liaison d'Ingénierie de Trafic acheminant l'ID d'attribut de liaison réelle est insuffisante, une Liaison d'Ingénierie de Trafic acheminant l'ID d'attribut de liaison virtuelle est en outre sélectionnée en tant que ressource de calcul de trajet dans la couche de client de réseau.

5. Dispositif destiné à calculer un trajet de service, comprenant :
une unité de réception d'informations, apte à obtenir des informations de Liaison d'Ingénierie de Trafic acheminant un ID d'attribut de liaison qui sont émises dans une couche de client de réseau ;
une unité de sélection de ressource, apte à sélectionner une Liaison d'Ingénierie de Trafic correspondant à l'ID d'attribut de liaison qui satisfait à une exigence de service en tant que ressource de calcul de trajet dans la couche de client de réseau conformément à l'exigence de service et aux informations de Liaison d'Ingénierie de Trafic ; et
une unité de calcul de trajet, apte à calculer un trajet de service conformément à la ressource de calcul de trajet sélectionnée,
dans lequel l'ID d'attribut de liaison est un ID d'attribut de liaison réelle ou un ID d'attribut de liaison virtuelle, et l'ID d'attribut de liaison réelle identifie une Liaison d'Ingénierie de Trafic en tant que liaison réelle et l'ID d'attribut de liaison virtuelle identifie une Liaison d'Ingénierie de Trafic en tant que liaison virtuelle,
comprenant en outre :
une unité d'identification, apte à identifier une Liaison d'Ingénierie de Trafic en tant que liaison réelle et/ou en tant que liaison virtuelle ; et
une unité d'émission, apte à émettre des informations de Liaison d'Ingénierie de Trafic acheminant l'ID d'attribut de liaison réelle et/ou l'ID d'attribut de liaison virtuelle ;
comprenant en outre :
une unité de modification d'ID apte à établir un trajet de couche de service correspondant dans la couche de service de réseau conformément à une Liaison d'Ingénierie de Trafic acheminant l'ID d'attribut de liaison virtuelle, à modifier l'ID d'attribut de la Liaison d'Ingénierie de Trafic en tant que liaison réelle, et à le notifier à l'unité émettrice ;
l'unité émettrice, apte à réémettre de nouvelles informations de Liaison d'Ingénierie de Trafic acheminant l'ID d'attribut de liaison réelle dans la couche de client de réseau conformément à la notification reçue ; et
l'unité de réception d'informations, apte à obtenir de nouvelles informations de Liaison d'Ingénierie de Trafic acheminant l'ID d'attribut de liaison réelle et réémises dans la couche de client de réseau ;
dans lequel l'unité de sélection de ressource comprend :
une unité de distinction de demande, apte à envoyer une première notification de sélection de ressource de trajet lorsqu'il est déterminé qu'une demande reçue est une demande d'établissement rapide d'un trajet de service ; et
une unité de mise en oeuvre de sélection de ressource apte à sélectionner une Liaison d'Ingénierie de Trafic acheminant l'ID d'attribut de liaison réelle en tant que ressource de calcul de trajet dans la couche de client de réseau conformément à la première notification de sélection de ressource de trajet reçue.

6. Dispositif destiné à calculer un trajet de service selon la revendication 5, dans lequel :
l'unité de mise en oeuvre de sélection de ressource est en outre apte à sélectionner de manière supplémentaire une Liaison d'Ingénierie de Trafic acheminant l'ID d'attribut de liaison virtuelle en tant que ressource de calcul de trajet dans la couche de client de réseau lorsqu'il est déterminé que la ressource de Liaison d'Ingénierie de Trafic acheminant l'ID d'attribut de liaison réelle est insuffisante.

7. Dispositif destiné à calculer un trajet de service selon la revendication 5, dans lequel :
l'unité de distinction de demande est en outre apte à envoyer une seconde notification de sélection de ressource de trajet lorsqu'il est déterminé qu'une demande reçue n'est pas une demande d'établissement rapide d'un trajet de service ; et
l'unité de mise en oeuvre de sélection de ressource est en outre apte à sélectionner une Liaison d'Ingénierie de Trafic acheminant l'ID d'attribut de liaison réelle et/ou l'ID d'attribut de liaison virtuelle en tant que ressource de calcul de trajet dans la couche de client de réseau conformément à la seconde notification de sélection de ressource de trajet reçue et à une ressource de topologie de réseau.
